# EUROPEAN PATENT APPLICATION

(11) **EP 1 983 435 A2**
(43) Date of publication of application: **22.10.2008**
(21) Application number: 08154568.3
(22) Date of filing: 15.04.2008
(51) Int. Cl.: G06F 11/14

(54) **Computer-readable recording medium for recovery of software**

(30) Priority: 20.04.2007 JP 2007112161
(71) Applicant: Fanuc Ltd, Yamanashi 401-0597 (JP)
(72) Inventor: Murata, Koichi, Minamitsuru-gun Yamanashi 401-0597 (JP); Morisaki, Kazuhiko, Minamitsuru-gun Yamanashi 401-0597 (JP)
(74) Representative: Ward, James Norman

(57) **Abstract**

A computer-readable recording medium storing a program for effectively restoring a previous status of a storage device which stores information of basic software, application software and setting data therefor in a computerized numerical controller when replacing the storage device. The recording medium stores a software recovery program for requiring an operator to select one of the functions of: installing a set of software with default setting; retreating all information stored in the storage device to an external storing device; restoring the all information retreated in the external storing device to the storage device, and performing one of the functions selected by the operator.

## Description

### BACKGROUND OF THE INVENTION

### 1. Field of the Invention

The present invention relates to a computer-readable recording medium device for reducing labor of retreating and/or restoring software stored in a storage device of a numerical controller when the storage device is to be replaced.

### 2. Description of Related Art

For recovering software stored in a hard disk provided in a computer equipped device, there is known a method using a recovery medium as described in the background art in JP2005-327003A. The recovery medium is an external storage medium such as a CD (compact disk) or a DVD (digital video disk) which stores a software set with default or initial setting and a recovery program for installing the software set in the storage device. When the computer is started with the recovery medium inserted into the computer, the hard disk provided in the computer is initialized and the software with default setting are installed in the hard disk.

Therefore, since all of the data stored in the hard disk are erased when the recovery of the hard disk is performed, it is necessary to back up the data stored in the hard disk to an auxiliary storing device before the recovery and to restore the backed up data in the hard disk after the recovery.

In the case of the computerized numerical controller, when replacing the storage device which stores basic software, application software and setting data therefor with a new one, it is necessary to restore the basic software, the application software and the setting data in the replaced storage device.

However, according to the conventional method of recovery of software using the recovery medium, only the basic software with initial setting is restored, and therefore it is required to restore the basic software with initial setting using the recovery media and then apply the setting data prepared by a user to customize the basic software and install the application software added by the user and apply the setting data for the application software, to raise a problem of requiring considerable time and labor to recover the previous state of the numerical controller.

### SUMMARY OF THE INVENTION

As described, it has been necessary to install the basic software and application software and apply the setting data therefor when replacing a storage device provided for storing the software in the computerized numerical controller. The present invention provides a computer-readable recording medium capable of retreating and restoring the basic software, the application software and the setting data therefor stored in a storage device as well as installing the basic software with default setting so as to reduce the labor of recovering the software when replacing the storage device of the computerized numerical controller.

According to the present invention, it is determined whether or not the storage device of the computerized numerical controller stores any software and further it is determined whether or not an external storing device, such as a compact flash (registered trade mark), a USB memory and a network drive, is connected to the computerized numerical controller. Based on the determinations, information of the software and data stored in the storage device is retreated to the external storing device with additional information indicating the retreated information and the retreated information is restored in the replaced storage device.

A computer-readable recording medium of the present invention stores a program for recovering software in a storage device provided in a computerized numerical controller when starting the computerized numerical controller. According to one aspect of the present invention, the program is executed by the computerized numerical controller to perform the functions of: installing a set of software with default setting; retreating all information stored in the storage device to be backed up in an external storing device connected to the computerized numerical controller with additional information indicative of retreated information; restoring the all information retreated in the external storing device to the storage device; and displaying a query for an operator to select one of the above functions and performing the one of the functions selected by the operator.

According to another aspect of the present invention, the program is executed by the computerized numerical controller to perform the functions of: determining whether or not an external storing device is connected to the computerized numerical controller; determining whether or not substantive information is stored in the storage device; installing a software set with default setting; retreating all information stored in the storage device to be backed up in the external storing device with additional information indicative of retreated information; restoring the information retreated in the external storing device to the storage device; displaying a query for an operator to permit performing the function of installing the software set in the storage device, when it is determined that the external storing device is not connected to the computerized numerical controller, and perform the function permitted by the operator; displaying a query for the operator to select one of the functions of installing the software set to the storage device, retreating the all information to the external storing device and restoring the retreated information in the storage device, when it is determined that the external storing device is connected to the computerized numerical controller and that substantive information is stored in the storage device, and executing the one of the functions selected by the operator.

The program may be prepared to be executed by the computerized numerical controller to perform a further function of displaying a query to the operator to select one of the functions of installing the software set in the storage device and restoring the retreated information in the storage device when it is determined that substantive information is not stored in the storage device, and performing the function selected by the operator.

With the computer-readable recording medium of the present invention, the software with customized setting by an operator and the data stored in a storage device of the computerized numerical controller are retreated and restored in addition to installing of a software set with default setting for use in the computerized numerical controller so that the labor of recovering the software when replacing the storage device is reduced, and it is made unnecessary to separately prepare dedicated software for retreating the software stored in the storage device.

### BRIEF DESCRIPTION OF THE DRAWINGS

FIG. 1 is a schematic view of a numerical controller to be used in an embodiment of the present invention;
FIG. 2 is a flowchart of processing to be performed by execution of a program stored in a computer-readable recording medium of the present invention;
FIG. 3 shows an example of a message displayed on a display device of the numerical controller when an external storing device is not connected to the numerical controller;
FIG. 4 shows an example of a message displayed on the display device when an external storing device is connected to the numerical controller and substantive information is not stored in a storage device of the numerical controller; and
FIG. 5 shows an example of a message displayed on the display device when the external storing device is connected to the numerical controller and substantial information is stored in the storage device.

### DETAILED DESCRIPTION

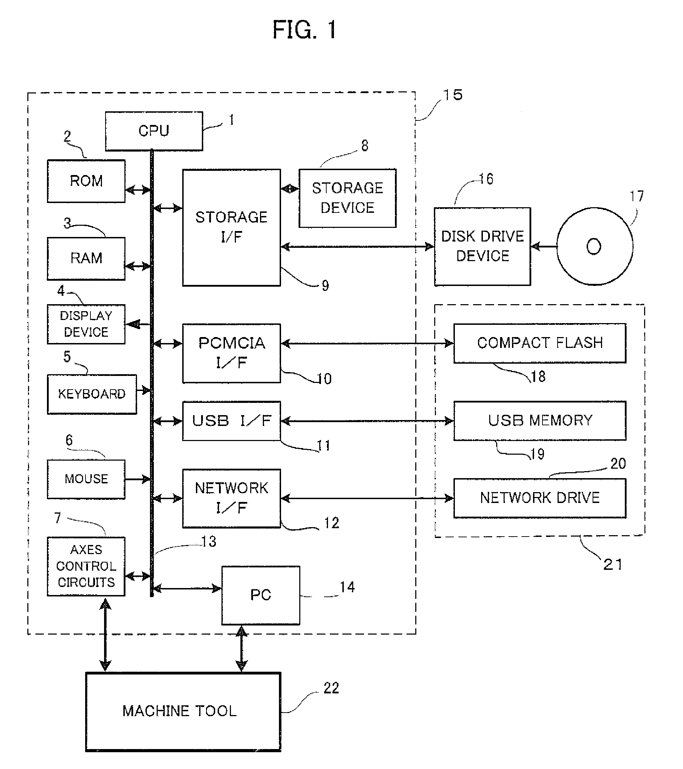

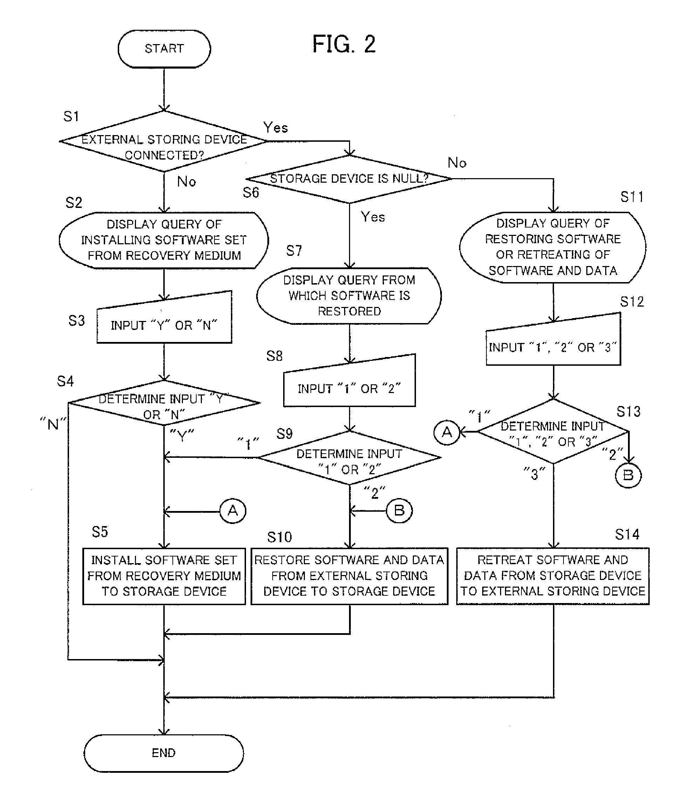

An embodiment of the present invention will be described referring to the accompanied drawings. FIG. 1 schematically shows a hardware structure of a computerized numerical controller (CNC) according to the embodiment of the present invention, and FIG. 2 is a flowchart describing the processing according to the present invention.

A computerized numerical controller 15 comprises a ROM 2, RAM 3, a display device 4, a keyboard 5, a mouse 6, axes control circuits 7, a storage interface 9, a PCMCIA interface 10, a USB interface 11, a network interface 12 and a PC (programmable controller) 14 which are connected to a CPU 1 via a bus 13. A compact flash (registered trademark) memory 18, a USB memory 19 and a network drive 20, as external storing devices 21, can be connected to the numerical controller 15 through the PCMCIA interface 10, a USB interface 11 and a network inter face 12, respectively.

A storage device 8 and a disk drive device 16 are connected to the CPU 1 of the numerical controller 15 through the storage interface 9. The storage device 8, which may comprise a hard disk or a compact flash (registered trade mark) card, stores all information of basic software for use in the numerical controller and various kinds of application software and setting data for the software. The all information includes the cases of the basic software only; the basic software and the setting data therefor; the various kinds of application software only; the various kinds of application software and the setting data therefor; the basic software, application software and the setting data therefor, and the setting data only. The disk drive device 16 drives a CD, a DVD, etc. as a recovery medium 17.

The CPU 1 is a processor for totally controlling the numerical controller 15. The CPU 1 read a system program stored in the ROM 2 and controls the numerical controller 15 according the system program. The RAM 3 stores programs read from the disk drive device 16, temporary calculation data, display data, and various data inputted by an operator through a keyboard 5 and a mouse 6.

In FIG. 1, there are shown a plurality of different external storing devices to be connected to the numerical controller 15, however, at least one external storing device may be provided to be connectable to the numerical controller 15. The axes controllers 7 control positions/velocities of motors for respective axes of a machine tool 22 and the PC 14 performs a sequence control of the machine tool 22.

The recovery medium 17 is inserted into the disk drive device 16 of the numerical controller 15 having the above configuration before turning on a power supply of the numerical controller 15. When the power supply is turned on in this state, the disk drive device 16 is actuated and a software recovery program stored in the recovery medium 17 is transferred to the RAM 3 for temporary storage.

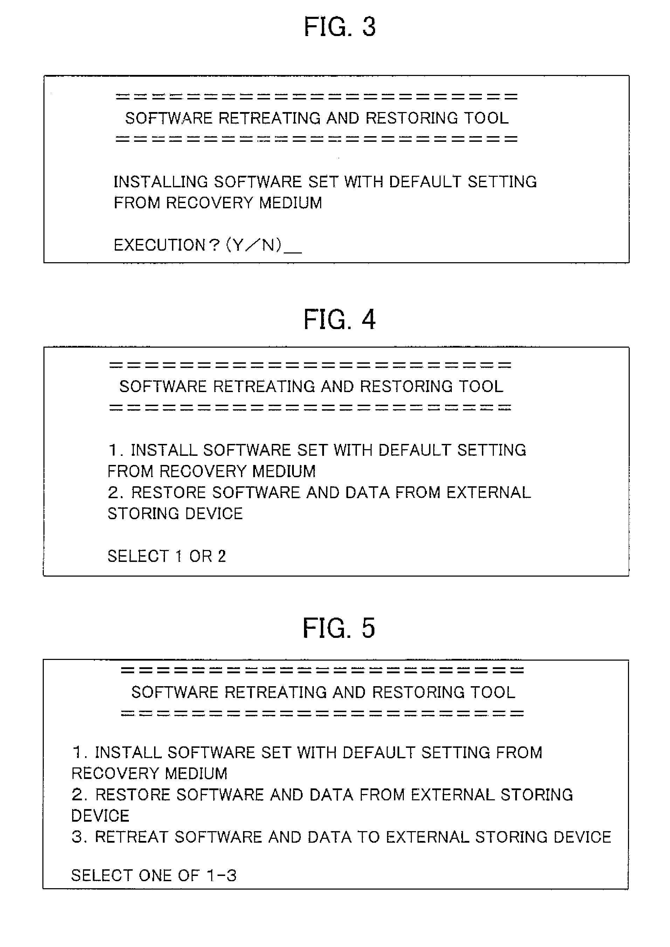

The CPU 1 starts the processing shown in the flowchart of FIG. 2 according to the software recovery program stored in the RAM 3. First, it is determined whether or not the external storing device 21 is connected to the numerical controller 15 (Step S1), and if not, a message with query as shown in FIG. 3 is displayed on the display device 4 to require an operator to input Y (Yes) or N (No) instructing whether or not a software set with default setting stored in the recovery media 17 is to be installed in the storage device 8 of the numerical controller 15 (Step S2). The operator manually inputs Y to install the software set, or N not to install the software set (Step S3). The input is judged, and if it is Y the software set with default setting is stored in the storage device 8 (Step S56) and the procedure is terminated.

If it is determined that the external storing device 21 is connected to the numerical controller 15 in Step S1, it is further determined whether content of the storage device 8 is null (i.e. substantive information is not stored in the storage device 8) or not (Step S6). If the storage device 8 is null (which means that software and data are not stored in the storage device 8), a message with query shown in FIG. 4 is displayed on the display device to require the operator to input an instruction of whether 1. installing the software set with default setting in the storage device 8 from the recovery medium 17, or 2. restoring the software and the setting data from the external storing device 21 to the storage device 8 (Step S7). The operator manually inputs "1" to install the software set with default setting from the recovery media 17 or "2" to restore the software and the setting data from the external storing device 21, using the keyboard 5 (Step S8). The input is judged (Step S9), and if it is "1", the software set with default setting is installed in the storage device 8 from the recovery medium 17 (Step S5) and if it is "2", the software and the setting data which have been retreated in the external storing device 21 are restored in the storage device 8 (Step S10), to terminate the procedure.

If it is determined that the storage device 8 is not null in Step S6, a message with query shown in FIG. 5 is displayed in the display device 4, to require for the operator to input an instruction of whether 1. installing the software set with default setting in the storage device 8 from the recovery media 17, 2. restoring the software and the data in the storage device 8 from the external storing device 21, or 3. retreating the software and the data stored in the storage device 8 to the external storing device 21 (Step S11). The operator selects and manually inputs one of the above options through the keyboard 5 (Step S12). The input is judged (Step S13), and if it is "1" the software set with default setting is installed in the storage device 8 from the recovery medium 17, if it is "2", the software and the data are restored in the storage device 8 from the external storing device 21, and if it is "3", the software and the data stored in the storage device 8 are retreated in the external storing device 21 (Step S 14), to terminate the procedure.

When replacing the storage device 8 with a new storage device, an operator inserts the recovery medium 17 into the disk drive device 16 and connects the external storing device 21 to the numerical controller 15 before turning on the power supply of the numerical controller 15 and starts the numerical controller 15. The processing automatically proceeds from Step S1 through Step S 6 to Step S11 according to the software recovery program, and the operator selects the option "3" in Step 12 to retreat the software and data stored in the present storage device 8 to terminate the procedure, and then turns off the power supply of the numerical controller 15. The operator replaces the present storage device 8 with a new storage device and starts the numerical controller 15 with the external storing device 21 connected to the numerical controller 15. The procedure proceeds from Step S1 through Step S6 to Step S7, and the operator selects the option "2" in Step S8 to restore the retreated software and data from the external storing device 21 to the new storage device, so that the software in the previous state is retrieved in the new storage device. In the case of using the software set with default setting, the operator may input "Y" in Step S3, "1" in Step S7 or Step S 12 of the above procedure.

In view of preventing an operator's error in manual input, in requiring an input to select one of the options when the external storing device 21 is connected to the numerical controller 15, there may be provided an additional step of displaying a query requiring an input of Y (Yes) or N (No) by the operator for assuring the input. The manual data input device is not limited to the keyboard but may be a touch panel on the display device 4, etc.

Further, it is not limited to an arrangement of starting the software recovery program when the power supply is turned on after the recovery medium 17 is inserted into the disk drive device 16, but the recovery program may be started when the recovery media 17 is inserted into the disk drive device 16 after the power supply of the numerical controller 15 is turned on.

Furthermore, the software and date in the external storing device 21 may be software and data which have been retreated from a storage device of a numerical controller different from the numerical controller to which the software and data are recovered.

When the information of the software and the data are retreated from the storage device 8 to the external storing device 21, information indicative of the retreated information may be added to the retreated information and date for allowing an automatic restoration of the software and the data may be stored in the external storing device 21, so that the restoring of the software and the data is automatically performed without requiring an operator's manual input when the data are detected in the external storing device 21.

## Claims

1. A computer-readable recording medium storing a program for recovering a software set in a storage device provided in a computerized numerical controller when starting the computerized numerical controller, said program being executed by the computerized numerical controller to perform the functions of:
installing a set of software with default setting;
retreating all information stored in the storage device to be backed up in an external storing device connected to the computerized numerical controller with additional information indicative of retreated information;
restoring the all information retreated in the external storing device to the storage device; and
displaying a query for an operator to select one of said functions and performing one of the functions selected by the operator,

2. A computer-readable recording medium storing a program for recovering a software set in a storage device provided in a computerized numerical controller when starting the computerized numerical controller, said program being executed by the computerized numerical controller to perform the functions of:
determining whether or not an external storing device is connected to the computerized numerical controller;
determining whether or not substantive information is stored in the storage device;
installing a software set with default setting;
retreating all information stored in the storage device to be backed up in the external storing device with additional information indicative of retreated information;
restoring the information retreated in the external storing device to the storage device;
displaying a query for an operator to permit performing the function of installing the software set in the storage device, when it is determined that the external storing device is not connected to the computerized numerical controller, and perform the function permitted by the operator;
displaying a query for the operator to select one of the functions of installing the software set to the storage device, retreating the all information to the external storing device and restoring the retreated information in the storage device, when it is determined that the external storing device is connected to the computerized numerical controller and that substantive information is stored in the storage device, and executing the one of the functions selected by the operator.

3. A computer-readable recording medium according to claim 2, wherein the program is executed by the computerized numerical controller to perform a further function of displaying a query to the operator to select one of the functions of installing the software set in the storage device and restoring the retreated information in the storage device when it is determined that substantive information is not stored in the storage device, and performing the function selected by the operator.
